# EUROPÄISCHE PATENTSCHRIFT

(11) **EP 2 013 264 B1**
(45) Veröffentlichungstag und Bekanntmachung des Hinweises auf die Patenterteilung: **08.07.2020**
(21) Anmeldenummer: 06818788.9
(22) Anmeldetag: 24.11.2006
(51) Int. Cl.: C08G 73/18

(54) **HOCHMOLEKULARE POLYAZOLE MIT VERBESSERTER LÖSLICHKEIT UND VERFAHREN ZU IHRER HERSTELLUNG**
HIGH MOLECULAR WEIGHT POLYAZOLES WITH IMPROVED SOLUBILITY AND PROCESS FOR THEIR PREPARATION
POLYAZOLES DE MASSE MOLECULAIRE ELEVEE PRESENTANT UNE SOLUBILITE AMELIOREE ET LEUR PROCEDE DE FABRICATION

(30) Priorität: 08.12.2005 DE 102005058579
(43) Veröffentlichungstag der Anmeldung: 14.01.2009
(73) Patentinhaber: Carl Freudenberg KG, 69469 Weinheim (DE)
(72) Erfinder: MÄHR, Ulrich, 14052 Berlin (DE); MELZNER, Dieter, 37075 Göttingen (DE); REICHE, Annette, 37079 Göttingen (DE); GRONWALD, Oliver, 37085 Göttingen (DE)
(74) Vertreter: Grättinger Möhring von Poschinger Patentanwälte Partnerschaft mbB
(86) Internationale Anmeldenummer: PCT/EP2006/011269
(87) Internationale Veröffentlichungsnummer: WO 2007/065565

(56) Entgegenhaltungen:
- WO-A-2004/055097
- US-A1- 2004 028 824

## Beschreibung

Die Erfindung betrifft hochmolekulare Polyazole, insbesondere Polybenzimidazole, die in besonderem Maße für die Herstellung von Membranen geeignet sind und ein zweistufiges Verfahren zu ihrer Herstellung, das ein Erhitzen eines Präpolymers über ein definiertes Temperatur-Zeit-Programm umfasst.

Polyazole werden zur Herstellung von Hochtemperaturfolien und -fasern verwendet. Wegen ihrer thermischen und oxidativen Beständigkeit werden sie außerdem zur Herstellung von Polymerelektrolytmembranen (PEM) für HochtemperaturBrennstoffzellen verwendet, welche bei Arbeitstemperaturen bis 250°C einsetzbar sind. An die Ausgangspolymere für derartige PEM werden besondere Anforderungen gestellt. So darf das Molekulargewicht einen Mindestwert nicht unterschreiten, da sonst keine selbsttragenden und mechanisch stabilen Polyazolmembranen gebildet werden. Zur Erzielung mechanisch stabiler Polyazolmembranen sollten deshalb Polymere mit möglichst hohem Molekulargewicht eingesetzt werden.
Unter Polyazolen werden im Sinne der Erfindung Verbindungen verstanden, die ausgewählt sind aus der Gruppe umfassend Polybenzimidazole, Polyimidazole, Polybenzthiazole, Polybenzoxazole, Polyoxadiazole, Polychinoxaline, Polythiadiazole oder Mischungen daraus.
Die Herstellung von Polyazolmembranen erfolgt üblicherweise durch ein Verdunstungsverfahren, d.h. durch Entfernung des Lösungsmittels aus einem Film einer hochviskosen Polymerlösung auf einer Unterlage. Voraussetzung für die Herstellung der Polymerlösung und somit für eine hohe Effektivität des Membranherstellungsprozesses ist somit eine hohe Löslichkeit des Polymeren in einem organischen Lösungsmittel. Für die Herstellung von Membranen aus Polybenzimidazolen wird üblicherweise N,N-Dimethylacetamid als Lösungsmittel eingesetzt.

Polyazole können an Hand der inherenten Viskosität bzw. Grenzviskosität ihrer Lösungen charakterisiert werden. Üblicherweise wird diese für eine 1gew.-%ige Lösung der Polyazole in N,N-Dimethylacetamid bei 25°C bestimmt, wobei zunächst mit Hilfe eines Ubbelohde-Viskosimeters der Firma Schott die kinematische Viskosität der lgew.-%igen Lösung des Polyazols bei 25°C ermittelt wird. Über die relative Viskosität kann daraus in bekannter Weise die inherente Viskosität errechnet werden. Ausgehend von der inherenten Viskosität lässt sich mit Hilfe der Mark-Houwink-Beziehung eine zahlenmittlere oder gewichtsmittlere Molmasse des Polymers in g/mol errechnen.
Für die Herstellung von Polymerelektrolytmembranen werden üblicherweise Polyazole eingesetzt, deren 1gew.-%ige Lösungen eine inherente Viskosität von 1,0 dl/g aufweisen (US-5,902,876). Aus US-4,535,144 und US-4,414,383 sind Polyazole bekannt, für deren Lösung inherente Viskositäten von wenigstens 1,0 dl/g bzw. 0,7 dl/g angegeben sind.
In der Literatur wird übereinstimmend festgestellt, daß die Löslichkeit von Polyazolen mit steigendem Molekulargewicht deutlich abnimmt (A. Buckley, "Encyclopedia of Polymer Science and Engineering", Vol. 11, John Wiley and Sons, 1988). So ist hochmolekulares Polybenzimidazol (inherente Viskosität der 1gew.-%igen Lösung >1,5 dl/g) in organischen Lösungsmitteln nahezu unlöslich und nur unter sehr drastischen Lösungsbedingungen in Lösung zu bringen (H. Vogel und C. S. Marvel, "Polybenzimidazoles, New Thermally Stable Polymers" in Journal of Polymer Science, Vol. L., Seiten 511-539 (1961); Roya Ameri, "Polybenzimidazole film containing phosphoric acid as proton exchange membrane (PEM)", Dissertation, Case Western Reserve University, May 1997).
Eine Erhöhung der Löslichkeit des Polymeren in organischen Lösungsmitteln kann durch Zugabe von lösungsvermittelnden und lösungsstabilisierenden Additiven wie LiCl erreicht werden. Für die Membranherstellung nachteilig ist, daß diese Additive durch zusätzliche Verfahrensschritte wieder aus den resultierenden Membranen entfernt werden müssen, da z.B. die Chloridionen einen negativen Einfluß auf die elektrochemische Aktivität von Polymerelektrolyt-Brennstoffzellen (PEM-FC) aufweisen. (Roya Ameri, "Polybenzimidazole film containing phosphoric acid as proton exchange membrane (PEM)", Dissertation, Case Western Reserve University, May 1997).

In US-5,902,876 wird ein Verfahren zur Lösung von Polybenzimidazol in N,N-Dimethylacetamid beschrieben, bei dem auf die Zugabe der vorausgehend beschriebenen Additive verzichtet werden kann, wobei das Polymer unter Wasserausschluss bei höheren Drücken und Temperaturen von 280°C gelöst wird. Es wird im weiteren ausgeführt, dass lediglich Polybenzimidazol mit einer inherenten Viskosität von 1,0 dl/g gelöst werden kann.
Mit der Nutzung dieses Verfahrens, bei dem das Polymer bei Temperaturen weit über dem Siedepunkt des Lösungsmittels unter Druck gelöst wird, verbinden sich verschiedene Nachteile. Einerseits ist das Verfahren bedingt durch die hohen, für die Verarbeitung von Polymeren unüblichen Temperaturen und die autogene Druckatmosphäre technisch aufwendig. Die zum Einsatz kommenden Rührautoklaven erfordern eine aufwendige verfahrens- und sicherheitstechnische Auslegung. An die Materialbeständigkeit der Dichtungen werden hohe Anforderungen gestellt. Ein weiterer Nachteil besteht darin, daß N,N-Dimethylacetamid unter den Bedingungen der Lösungsherstellung nicht beständig ist. Unter den angegebenen Druck- und Temperaturbedingungen bilden sich niedermolekulare Spaltprodukte, wie z. B. Amine. Diese können bei der Membranherstellung zu Fehlstellen, wie z.B. Gasblasen führen (WO 02/36661 A1). Aus den Patentschriften US-4,535,144 und US-4,414,383 sind Polykondensationsverfahren zur Herstellung höhermolekularer Polyazole bekannt. Mit einem zweistufigen Polykondensationsverfahren wird in der Schmelze Poly[2,2-(m-phenylen)-5,5 bisbenzimidazol] hergestellt. Nachteilig bei diesen Verfahren ist, dass die resultierenden Polyazole ein niedriges Molekulargewicht aufweisen und nicht ohne Additive bzw. nur bei Temperaturen oberhalb der Siedetemperatur des Lösungsmittels und höherem Druck in organischen Lösungsmitteln löslich sind.

Weiterhin sind aus der WO 2004/055097 A1 hochmolekulare Polyazole, ein Verfahren zu deren Herstellung sowie deren Verwendung zur Herstellung einer protonenleitfähigen Membran bekannt, welche eine intrinsische Viskosität von mindestens 1,3 dl/g und eine verbesserte Lagerfähigkeit aufweisen. Besondere Maßnahmen zu Verbesserung der Löslichkeit von hochmolekularen Polyazolen werden dabei jedoch nicht genannt.

Der Erfindung liegt deshalb die Aufgabe zu Grunde, hochmolekulare Polyazole bereitzustellen, die für die Herstellung von Polymerelektrolytmembranen für Hochtemperaturbrennstoffzellen in besonderem Maße geeignet sind und die in organischen Lösungsmitteln dafür ausreichend löslich sind, sowie ein Verfahren zur Herstellung derartiger Polyazole vorzuschlagen.

Die Aufgaben werden durch die in den unabhängigen Ansprüchen definierten Gegenstände gelöst. Vorteilhafte Weiterbildungen werden durch die abhängigen Ansprüche definiert.

Erfindungsgemäße Polyazole zeichnen sich dadurch aus, dass die inherente Viskosität einer 1 gew.-%igen Polymerlösung in N,N-Dimethylacetamid grösser als 1,1 dl/g ist, bevorzugt bis 1,9 dl/g und dass sich mindestens 80 Gew.-% des Polymeren in N,N-Dimethylacetamid unter Atmosphärendruck lösen. Bevorzugt sind Polyazole mit einer inherenten Viskosität ihrer 1 gew.-%igen Lösungen im Bereich von 1,3 bis 1,7 dl/g und besonders bevorzugt im Bereich von 1,4 bis 1,6 dl/g und mit bevorzugt mehr als 90 gew.-%iger und besonders bevorzugt vollständiger oder nahezu vollständiger Löslichkeit der Polyazole in N,N-Dimethylacetamid als organisches Lösungsmittel unter Atmosphärendruck. Unter nahezu vollständiger Löslichkeit soll eine Löslichkeit von mindestens 99 Gew.-% verstanden werden.
In einer bevorzugten Ausführungsform der Erfindung sind die Polyazole aus der Gruppe der Polybenzimidazole ausgewählt. Unter den Polybenzimidazolen ist das Poly[2,2-(m-phenylen)-5,5 bisbenzimidazol] besonders bevorzugt.
Überraschender weise wurde gefunden, dass die Löslichkeit erfindungsgemäßer Polyazole in organischen Lösungsmitteln so hoch ist, daß der Lösungsprozess bei Temperaturen im Bereich der Siedepunkte der Lösungsmittel bei Atmosphärendruck oder nahezu ohne Überdruck durchgeführt werden kann. So kann ein erfindungsgemäßes Poly[2,2-(m-phenylen)-5,5 bisbenzimidazol], dessen 1 gew.-%ige Lösung in N,N-Dimethylacetamid eine inherente Viskosität von 1,5 dl/g aufweist (Molekulargewicht ≈ 225000 g/mol) unter Atmosphärendruck, d.h. bei der Siedetemperatur des Lösungsmittels N,N-Dimethylacetamid, mit nur geringen Rückständen von weniger als 1 Gew.-% gelöst werden.

Durch die gute Löslichkeit bei Atmosphärendruck kann das Verfahren zur Lösungsherstellung in vorteilhafter Weise entscheidend vereinfacht werden. Additive zur Löslichkeitsverbesserung oder zur Stabilisierung der Lösung sind nicht erforderlich. Weiterhin entfällt die Berücksichtigung von Drucksicherheitsrichtlinien bei der Auslegung des Rührgefäßes für Autoklaven. Die Auswahl der Dichtungsmaterialien gestaltet sich bei Verwendung der erfindungsgemäßen Polyazole wesentlich einfacher. Die erfindungsgemäßen Polyazole lassen sich zu Filmen, Membranen, Folien oder Fasern weiterverarbeiten, die sich aufgrund des hohen Molekulargewichtes der Polyazole durch verbesserte mechanische Eigenschaften auszeichnen.

Die erfindungsgemäße Herstellung der Polyazole erfolgt durch katalysierte Polykondensationsreaktion entsprechender Monomere. Das erfindungsgemäße Verfahren zur Herstellung von Polyazolen mit einer inherenten Viskosität einer 1-gew.- %igen Polymerlösung in N,N-Dimethylacetamid größer 1,1 dl/g, bevorzugt bis 1,9 dl/g und einer Löslichkeit in N,N-Dimethylacetamid von mindestens 80 Gew.-% unter Atmosphärendruck umfasst die folgenden Schritte:
a) Herstellen eines äquimolaren Gemisches aus einem Monomeren eines aromatischen Diaminderivates und einem Monomeren einer aromatischen Dicarbonsäure oder ihres Derivates unter Ausschluß einer oxidierenden Gasphase,
b) Herstellen einer Schmelze aus dem Gemische durch Erhitzen unter einem Inertgasstrom zur Abführung der flüchtigen Reaktionsprodukte auf eine Temperatur im Bereich von 200 bis 220°C unter kräftigen Rühren und Zugeben eines Katalysators,
c) Erhöhen der Schmelzetemperatur auf einen Bereich von 260 bis 280°C bei Aufrechterhalten des Inertgasstroms und unter Fortsetzen des kräftigen Rührens für 50 bis 70 Minuten und anschließend bei mäßigem Rühren für weitere 20 bis 40 Minuten,
d) Abkühlen der Schmelze und Gewinnen eines Präpolymeren durch Vermahlen und Entfernen der flüchtigen Reaktionsprodukte,
e) Erhitzen des nach Schritt d) erhaltenen Präpolymeren unter einem Inertgasstrom auf 370 bis 390°C mittels eines Temperatur-Zeit-Programms beginnend ab einer Temperatur im Bereich von 140 bis 170°C und endend bei Temperaturen im Bereich von 360 bis 380°C, wobei das Temperatur-Zeit-Programm vorzugsweise als Temperatur-Zeit-Stufenprogramm ausgeführt wird,
f) Tempern des Polyazols über einen Zeitraum von 40 bis 60 Minuten bei der Temperatur der letzten Temperatur-Zeit-Stufe,
g) Abkühlen des Polyazols nach Schritt g), sowie Mahlen und Waschen des Polyazols, wobei das Waschen vorzugsweise mit Alkoholen erfolgt.

Die oben genannten Polyazoleigenschaften werden durch die Ausführung der vorstehend genannten Verfahrensschritte, verbunden mit einer in Bezug auf Temperatur, Inertgasstrom und Verweilzeit genau definierte Reaktionsführung erreicht. Das wird durch die Wahl einer optimierten Reaktionstechnik unterstützt. In einer bevorzugten Ausführungsform des erfindungsgemäßen Verfahrens wird in den Schritten a bis c) bevorzugt ein von Inertgas druchströmtes Rührgefäß eingesetzt und in Schritt e) wird bevorzugt ein von Inertgas durchströmtes Reaktionsrohr mit definierter Reaktionszone eingesetzt.. Durch die eingestellten Reaktionsparameter werden Reaktions- und Nebenprodukte effektiv entfernt, so dass mit Reaktionsfortschritt eine optimale Polymersegmentbeweglichkeit erreicht wird und die Überhitzung des Reaktionsgemisches, die zu unerwünschten Nebenreaktionen, wie Verzweigung, Vernetzung oder Kettenabbrüchen führen können, vermieden wird. Zur Vermeidung unerwünschter Nebenreaktionen ist es außerdem notwendig, Monomere mit hohem Reinheitsgrad einzusetzen, sowie die Reaktion unter Feuchtigkeitsausschluß und unter Inertgasatmosphäre durchzuführen.
In einer bevorzugten Ausführungsform der Erfindung werden zur Herstellung von Poly[2,2-(m-phenylen)-5,5 bisbenzimidazol] 3,3-Diaminobenzidin und Diphenylisophtalat als Monomere zusammen mit Triphenylphosphit als Katalysator eingesetzt.

Die Erfindung soll nun an Hand der Ausführungsbeispiele näher beschrieben werden.

### Beispiel 1

### Herstellung von Poly[2,2-(m-phenylen)-5,5 bisbenzimidazol]

### Präpolymer:

214g 3,3-Diaminobenzidin und 318g Diphenylisophtalat werden in einem 31-Kessel mit Rührer vermischt. Der Kessel wird dicht verschlossen und für 10min mit Stickstoff gespült. Anschließend wird der Kessel evakuiert. Die Prozedur des Spülens und Evakuierens wird mehrmals wiederholt. Es wird ein konstanter Stickstofffluss von 20ml/min während der Reaktion eingestellt. Der Kessel wird unter Entstehung einer Monomerschmelze auf 210°C hochgeheizt, wobei die Rührerdrehzahl auf 200 Umdrehungen pro Minute (Upm) eingestellt wird. Der Schmelze wird 1ml Triphenylphosphit als Katalysator hinzugefügt.. Die Schmelze wird auf 270°C hochgeheizt. Die Schmelze wird 1h bei dieser Temperatur belassen. Der Rührer wird nach 30min auf 50Upm gestellt. Die Schmelze wird abgekühlt, vermahlen und 16h bei 100°C und 100mbar getrocknet.

### Endpolymer:

340g Präpolymer werden in ein Glasrohr gegeben. Das Glasrohr wird 10min mit Stickstoff gespült und dann evakuiert. Dieser Vorgang wird dreimal wiederholt. Das Glasrohr wird unter langsamer Rotation und einem konstanten Stickstofffluss von 20ml/min gemäss folgender in Tabelle 1 dargestellter Temperaturrampe (Temperatur-Zeit-Stufen) auf 380°C hochgeheizt.

**Tabelle 1**

| Temperatur | Zeit |
|---|---|
| [°C] | [min] |
| 150 | 2,5 |
| 200 | 2,5 |
| 225 | 2,5 |
| 250 | 2,5 |
| 275 | 2,5 |
| 300 | 2,5 |
| 325 | 2,5 |
| 350 | 2,5 |
| 370 | 2,5 |
| 380 | 50 |

Das Polymer wird abgekühlt, fein vermahlen, mit Methanol gewaschen und getrocknet.

### Beispiel 2

### Bestimmung der inherenten Viskosität

0,5g des nach Beispiel 1 hergestellten und 16h bei 100°C und 100mbar getrockneten Polybenzimidazols werden mit 49,5g trockenem N,N-Dimethylacetamid in einen Glaskolben gegeben. Der Glaskolben, auf den ein Rückflusskühkler aufgesetzt ist, wird über ein Ölbad auf 170°C aufgeheizt. Die Temperatur wird für 2h gehalten. Die Lösung wird abgekühlt und filtriert.

Bei 25°C wird mit einem Ubbelohde-Viskosimeter die kinematische Viskosität zu 3,5mm²/s bestimmt. Daraus wird die relative Viskosität mit 3,52 mm²/s errechnet. Durch Ausheizen der Lösung wird gravimetrisch die Konzentration bestimmt. Auf Basis von relativer Viskosität und Polymerkonzentration der Lösung wird die inherente Viskosität ermittelt, welche 1,6 dl/g beträgt.

### Beispiel 3

### Herstellung einer Polymerlösung

650g getrocknetes nach Beispiel 1 hergestelltes Polybenzimidazol werden mit 4350g N,N-Dimethylacetamid in einen Rührreaktor gegeben. Es wird 30min mit Stickstoff gespült. Der Reaktor wird auf eine Reaktorinnentemperatur von 170°C hochgeheizt. Die Temperatur wird für 3h gehalten. Die Polymerlösung wird abgekühlt und über eine Sartopure® Capsule der Sartorius AG filtriert..

### Beispiel 4

### Bestimmung der Löslichkeit

10g der nach Beispiel 3 hergestellten Polymerlösung werden in eine Aluminiumschale gegeben. Diese wird auf einer Heizplatte bei 250°C 16h lang getrocknet. Gravimetrisch wird der Polymergehalt der Lösung bestimmt. Daraus wurde eine Löslichkeit von 89 Gew.-% errechnet.

## Patentansprüche

1. Polyazole mit einer inherenten Viskosität einer 1-gew.-%igen Polymerlösung in N,N-Dimethylacetamid größer 1,1 dl/g und einer Löslichkeit in N,N-Dimethylacetamid von mindestens 80 Gew.-% unter Atmosphärendruck.

2. Polyazole nach Anspruch 1, wobei die Polyazole aus der Gruppe der Polybenzimidazole ausgewählt sind.

3. Polyazole nach Anspruch 2, wobei unter den Polybenzimidazolen Poly[2,2-(m-phenylen)-5,5 bisbenzimidazol] ausgewählt ist.

4. Verfahren zur Herstellung von Polyazolen mit einer inherenten Viskosität einer 1-gew.-%igen Polymerlösung in N,N-Dimethylacetamid größer 1,1 dl/g und einer Löslichkeit in N,N-Dimethylacetamid von mindestens 80 Gew.-% unter Atmosphärendruck, das folgende Schritte umfasst:
a) Herstellen eines äquimolaren Gemisches aus Monomeren von aromatischen Diaminderivaten und Monomeren von aromatischen Dicarbonsäuren oder ihrer Derivate unter Ausschluss einer oxidierenden Gasphase,
b) Herstellen einer Schmelze aus dem Gemische durch Erhitzen unter einem Inertgasstrom zur Abführung der flüchtigen Reaktionsprodukte auf eine Temperatur im Bereich von 200 bis 220°C unter kräftigen Rühren und Zugeben eines Katalysators,
c) Erhöhen der Schmelzetemperatur auf einen Bereich von 260 bis 280°C bei Aufrechterhalten des Inertgasstroms und unter Fortsetzen des kräftigen Rührens für 50 bis 70 Minuten und anschließend bei mäßigem Rühren für weitere 20 bis 40 Minuten,
d) Abkühlen der Schmelze und Gewinnen eines Präpolymeren durch Vermählen und Entfernen der flüchtigen Reaktionsprodukte,
e) Erhitzen des nach Schritt d) erhaltenen Präpolymeren unter einem Inertgasstrom auf 370 bis 390° C mittels eines Temperatur-Zeit-Programms beginnend ab einer Temperatur im Bereich von 140 bis 170°C und endend bei Temperaturen im Bereich von 360 bis 380°C,
f) Tempern des Polyazols über einen Zeitraum von 40 bis 60 Minuten bei der Temperatur im Bereich von 360 bis 380°C,
g) Abkühlen des Polyazols nach Schritt f), Mahlen und Waschen des Polyazols.

5. Verfahren nach Anspruch 4, wobei in den Schritten a) bis c) ein von Inertgas druchströmtes Rührgefäß und in den Schritt e) bis f) ein von Inertgas durchströmtes Reaktionsrohr eingesetzt wird.

6. Verfahren nach Anspruch 4 und 5, wobei als Monomere 3,3-Diaminobenzidin und Diphenylisophtalat eingesetzt werden.

7. Verfahren nach einem der Ansprüche 4 bis 6, wobei als Katalysator Triphenylphosphit eingesetzt wird.

## Claims

1. Polyazoles with an inherent viscosity, for a 1 % by weight polymer solution in N,N-dimethylacetamide, of more than 1.1 dL/g and a solubility in N,N-dimethylacetamide of at least 80 % by weight under atmospheric pressure.

2. Polyazoles as claimed in claim 1, wherein the polyazoles are selected from the group formed by polybenzimidazoles.

3. Polyazoles as claimed in claim 2, wherein poly[2,2-(m-phenylene)-5,5-bibenzimidazole] is selected from among the polybenzimidazoles.

4. A method for the production of polyazoles with an inherent viscosity, for a 1 % by weight polymer solution in N,N-dimethylacetamide, of more than 1.1 dL/g and a solubility in N,N-dimethylacetamide of at least 80 % by weight under atmosphere pressure, comprising the following steps:
a) producing an equimolar mixture of monomers of aromatic diamine derivatives and monomers of aromatic dicarboxylic acids or their derivatives with the exclusion of oxidizing gas phases,
b) producing a melt from the mixture by heating to a temperature in the range from 200 °C to 220 °C under a stream of inert gas in order to purge the volatile reaction products, with vigorous stirring and with the addition of a catalyst,
c) increasing the melt temperature to a range of 260 °C to 280 °C, maintaining the stream of inert gas and continuing the vigorous stirring for 50 to 70 minutes, and then with moderate stirring for a further 20 to 40 minutes,
d) cooling the melt and obtaining a pre-polymer by grinding and removing the volatile reaction products,
e) heating the pre-polymer obtained after step d) to 370 °C to 390 °C in a stream of inert gas by means of a temperature-time program, starting from a temperature in the range from 140 °C to 170 °C and ending at temperatures in the range from 360 °C to 380 °C,
f) tempering the polyazole over a time period of 40 to 60 minutes at a temperature in the range from 360 °C to 380 °C,
g) cooling the polyazole after step f), grinding and washing the polyazole.

5. The method as claimed in claim 4, wherein in steps a) to c), a mixing vessel through which an inert gas is passed is used and in steps e) to f), a tube reactor through which an inert gas is passed is used.

6. The method as claimed in claim 4 and claim 5, wherein 3,3-diaminobenzidine and diphenylisophthalate are used as the monomers.

7. The method as claimed in one of claims 4 to 6, wherein triphenyl phosphite is used as the catalyst.

## Revendications

1. Polyazoles dont une solution polymérique à 1 % en poids dans du N,N-diméthylacétamide présente une viscosité inhérente supérieure à 1,1 dl/g et dont la solubilité dans du N,N-diméthylacétamide est d'au moins 80 % en poids sous pression atmosphérique.

2. Polyazoles selon la revendication 1, les lesdits polyazoles étant choisis dans le groupe des polybenzimidazoles.

3. Polyazoles selon la revendication 2, le poly[2,2-(m-phénylène)-5,5-bis-benzimidazole] étant le composé de choix parmi lesdits polybenzimidazoles.

4. Procédé de fabrication de polyazoles dont une solution polymérique à 1 % en poids dans du N,N-diméthylacétamide présente une viscosité inhérente supérieure à 1,1 dl/g et dont la solubilité dans du N,N-diméthylacétamide est d'au moins 80 % en poids sous pression atmosphérique, lequel comprend les étapes suivantes :
a) préparation d'un mélange équimolaire à partir de monomères de dérivés de diamines aromatiques et de monomères d'acides dicarboxyliques aromatiques ou de leurs dérivés, réalisée à l'abri de toute phase gazeuse oxydante,
b) préparation d'une matière en fusion à partir dudit mélange en le chauffant, sous un flux de gaz inerte destiné à évacuer les produits de réaction volatils, à une température comprise entre 200 et 220 °C, en procédant à une forte agitation et en ajoutant un catalyseur,
c) augmentation de la température de la matière en fusion à une fourchette entre 260 °C et 280 °C en maintenant le flux de gaz inerte et en poursuivant la forte agitation pendant 50 à 70 minutes, pour ensuite procéder à une agitation d'intensité modérée pendant 20 à 40 minutes,
d) refroidissement de la matière en fusion et obtention d'un prépolymère par broyage et évacuation des produits volatils de la réaction,
e) réchauffement du prépolymère obtenu à l'issue de l'étape d) sous un flux de gaz inerte jusqu'à 370 à 390 °C au moyen d'un programme température-temps qui commence à une température comprise entre 140 et 170 °C et se termine à des températures comprises entre 360 et 380 °C,
f) traitement thermique du polyazole pendant une durée de 40 à 60 minutes à une température comprise entre 360 à 380 °C,
g) refroidissement du polyazole à l'issue de l'étape f), broyage et lavage dudit polyazole.

5. Procédé selon la revendication 4, dans lequel on met en œuvre, pour les étapes a) à c), un récipient sous agitation traversé par un flux de gaz inerte et, pour les étapes e) à f), un réacteur tubulaire traversé par un flux de gaz inerte.

6. Procédé selon les revendications 4 et 5, dans lequel on met en œuvre, en tant que monomères, de la 3,3-diaminobenzidine et du diphénylisophtlate.

7. Procédé selon l'une des revendications 4 à 6, dans lequel on met en œuvre, en tant que catalyseur, du triphénylphosphite.
